# EUROPÄISCHE PATENTANMELDUNG

(11) **EP 0 578 992 A2**
(43) Veröffentlichungstag der Anmeldung: **19.01.1994**
(21) Anmeldenummer: 93109823.0
(22) Anmeldetag: 19.06.1993
(51) Int. Cl.: G08B 13/24

(54) **Verfahren zur Herstellung von Sicherheitsetiketten**

(30) Priorität: 16.07.1992 DE 4223394
(71) Anmelder: ESSELTE METO INTERNATIONAL PRODUKTIONS GMBH, D-69434 Hirschhorn (DE)
(72) Erfinder: Gärtner, Hans, D-6948 Waldmichelbach (DE)

(57) **Zusammenfassung**

Ein wirtschaftliches Verfahren wird zur Herstellung von qualitativ hochwertigen Sicherheitsetiketten angewandt, wenn zunächst auf ein nichtmetallisches Band (3) ein hartmagnetischer Metallstreifen (5) und danach auf den Metallstreifen (5) eine Trägerfolie (6) aufgeklebt wird, die eine derartige Dicke und Elastizität aufweist, daß ein Stanzmesser (7) am Ort dessen Einwirkens auf den Metallstreifen (5) eine elastische Deformation des Metallstreifens (5) und der Trägerfolie (6) verursacht, die ausreicht, um den Metallstreifen (5) zu trennen. Hierfür kann ein schnell und präzise arbeitendes rotierendes Stanzmesser (7) verwendet werden, das aus dem nichtmetallischen Band (3) und dem Metallstreifen (5) Teile (8) herausstanzt, die von der Trägerfolie (6) abgelöst werden. Auf die verbleibenden Teile des hartmagnetischen Metallstreifens (5) wird ein weichmagnetisches Metallband (12) aufgebracht wird. Im Anschluß daran wird auf die eine Seite des auf obige Weise hergestellten Schichtmaterials Etikettenpapier (13) und auf die andere Seite ein Trägerband (15) aufgeklebt, so daß sich ein Zwischenprodukt ergibt, aus dem Etiketten gestanzt werden können.

## Beschreibung

Die Erfindung bezieht sich auf ein Verfahren zur Herstellung von Sicherheitsetiketten, wobei auf ein nichtmetallisches Band ein hartmagnetischer Metallstreifen und ein durchgehendes weichmagnetisches Metallband aufgeklebt werden.

Das eingangs beschriebene Verfahren zur Herstellung von Sicherheitsetiketten ist aus der DE-OS 32 44 430 bekannt. Hierbei wird auf ein Trägerband ein hartmagnetisches Bandmaterial aufgeklebt, indem das Trägerband von einer taktweise arbeitenden Vorschubeinrichtung in jeweils einstellbarer Länge von einer Vorratsrolle abgezogen wird. Gleichzeitig wird von einer Mehrzahl von Vorratsrollen ebenfalls taktweise eine Mehrzahl endloser Bänder aus hartmagnetischem Material abgezogen und über jeder Vorratsrolle zugeordnete Umlenkmittel derart ausgerichtet, daß die Enden der Bänder parallel zur Ebene des Trägerbandes liegen. Anschließend werden von Schneidemitteln, die den Umlenkmitteln zugeordnet sind, von dem hartmagnetischen Bandmaterial Streifen gleicher Länge abgeschnitten, die dann gleichmäßig miteinander fluchtend auf das Trägerband aufgeklebt werden. In weiteren Verfahrensschritten werden auf das mit dem hartmagnetischen Bandmaterial beklebte Trägerband ein weichmagnetischer Endlosstreifen und ein Deckband aufgebracht. Da von einer taktweise arbeitenden Vorschubeinrichtung nur relativ niedrige Transportgeschwindigkeiten des Trägerbandes erreichbar sind, ist auch der von diesem Herstellungsverfahren erreichbare Ausstoß an Etiketten relativ gering. Da zudem die in kurzen Streifen geschnittenen Bänder aus hartmagnetischem Material immer wieder exakt auf die dafür vorgesehenen Stellen des Trägerbandes geklebt werden müssen, können sich hierbei leicht Herstellungfehler ergeben.

Aufgabe der vorliegenden Erfindung ist es demzufolge, ein wirtschaftliches Verfahren zur Herstellung von qualitativ hochwertigen Sicherheitsetiketten zu schaffen.

Diese Aufgabe wird gemäß der Erfindung durch ein Verfahren zur Herstellung von Sicherheitsetiketten gelöst, das durch die folgenden Verfahrensschritte gekennzeichnet ist:
a) auf ein nichtmetallisches Band wird ein hartmagnetischer Metallstreifen aufgeklebt;
b) auf die mit dem Metallstreifen beklebte Seite des nichtmetallischen Bandes wird eine Trägerfolie aufgeklebt, die eine derartige Dicke und Elastizität aufweist, daß ein Stanzmesser am Ort dessen Einwirkens auf den Metallstreifen eine elastische Deformation des Metallstreifens und der Trägerfolie verursacht, die ausreicht, um den Metallstreifen zu trennen;
c) das Stanzmesser ist als rotierendes Messer ausgebildet, das aus dem nichtmetallischen Band und dem Metallstreifen Teile herausstanzt, die anschließend entfernt werden,
d) auf die verbleibenden Teile des nichtmetallischen Bandes wird eine Haltefolie aufgebracht;
e) die Trägerfolie wird von der mit Teilen des nichtmetallischen Bandes und des Metallstreifens versehenen Haltefolie abgelöst;
f) auf die verbleibenden Teile des hartmagnetischen Metallstreifens wird ein weichmagnetisches Metallband aufgebracht;
g) aus dem in den Verfahrensschritten a) bis f) hergestellten Schichtmaterial werden Etiketten gestanzt.

Dadurch, daß hierbei das Stanzmesser als rotierendes Messer ausgebildet ist und daß alle Bänder und Folien direkt miteinander verklebt werden, ohne vorher in kurze Streifen geschnitten zu werden, kann die Transportgeschwindigkeit des Band- und Folienmaterials und damit der Ausstoß an hergestellten Etiketten gegenüber dem bekannten Verfahren vergrößert werden. Zudem kann hierdurch die Qualität der Etiketten verbessert werden, da das Positionieren und miteinander Verkleben von Endlosmaterial sehr viel genauer steuerbar ist, als das Verarbeiten von in kurzen Streifen geschnittenem Bandmaterial.

Wirkt ein Stanzmesser auf einen Metallstreifen ein, der auf einer verformbaren Trägerfolie angeordnet ist, wird der Metallstreifen soweit in die Trägerfolie eingedrückt, bis er zerreißt oder zerbricht. Damit dieser Stanzvorgang problemlos ablaufen kann, muß die Trägerfolie zum einen eine gewisse Dicke aufweisen, für die dessen Gewicht charakterisierend ist, und zum anderen muß sie ausreichend elastisch und nachgiebig sein, für welche Eigenschaft dessen Rohdichte kennzeichnend ist. Als besonders vorteilhaft hat es sich hierbei erwiesen, wenn die Trägerfolie ein Gewicht von mehr als 100 gr/m², bspw. von 120 gr/m² und eine Rohdichte von mehr als 1 gr/cm³, bspw. von 1,2 gr/cm³ aufweist.

Insb. wenn die Trägerfolie als siliconisierte Folie ausgebildet ist, läßt sich die Haftwirkung der Trägerfolie derart beeinflussen, daß sie von dem mit kurzen Stücken des hartmagnetischen Metallstreifens beklebten nichtmetallische Band leicht ablösbar ist, ohne dieses Band zu beschädigen. Hierbei kann die Haltbarkeit dieses Bandes gegen Beschädigung dadurch erhöht werden kann, daß es aus Kunststoff hergestellt ist.

Bedruckbare Sicherheitsetiketten zum Anbringen auf zu verkaufende Waren lassen sich unter Verwendung des gemäß der Erfindung hergestellten Schichtmaterials auf einfache Weise dadurch produzieren, daß die Haltefolie auf ihrer mit dem Metallstreifen und dem Metallband versehenen Seite mit Etikettenpapier und auf ihrer dem Etikettenpapier abgewandten Seite mit einem Trägerband beklebt wird.

Die Erfindung wird im folgenden anhand eines Ausführungsbeispieles näher erläutert. Es zeigen
Figur 1 eine schematische Darstellung der zur Durchführung des Verfahrens erforderlichen Anordnung einzelner Vorrichtungselemente und
Figur 2 die sich beim erfindungsgemäßen Verfahren ergebenden Zwischen- und Endprodukte im Schnitt.

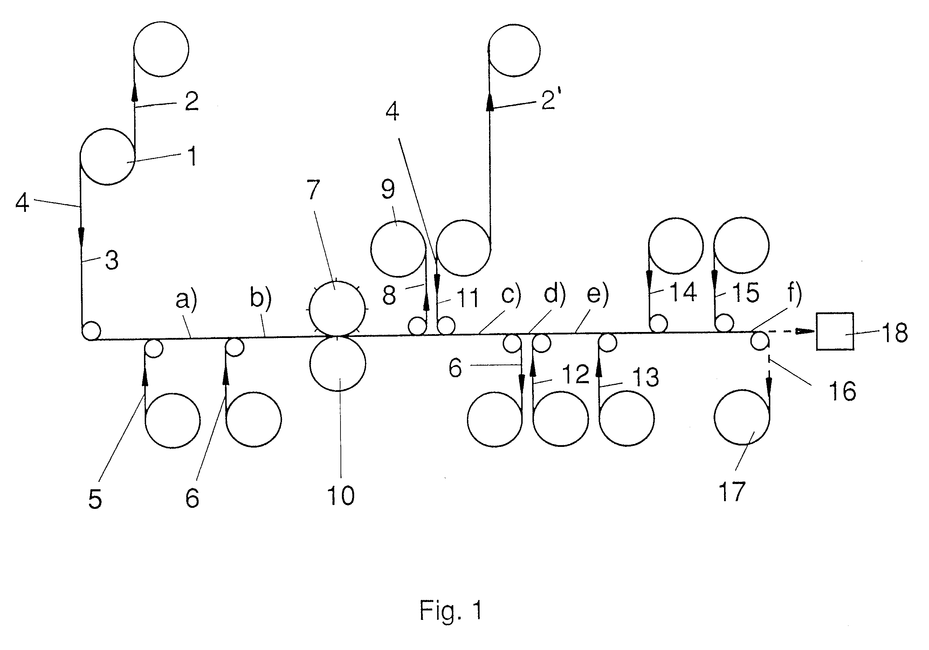

Wie in Fig. 1 dargestellte ist, wird als Ausgangsmaterial ein auf einer Vorratsrolle 1 aufgewickeltes nichtmetallisches Bandmaterial verwendet, das aus einem Siliconträgerband 2 und einem aus Kunststoff bestehenden Band 3 besteht, die über eine Leimschicht 4 miteinander verbunden sind. Da Silicon die Eigenschaft hat, Klebstoff gegenüber eine geringere Haftfähigkeit als Kunststoff aufzuweisen, bleibt die Leimschicht 4 auf dem Kunststoffband 3 haften, wenn, wie in Fig. 1 dargestellt, das Siliconträgerband 2 und das Kunststoffband 3 voneinander getrennt werden.

Unter Verwendung der Leimschicht 4 werden auf das Kunststoffband 3 ein hartmagnetischer Metallstreifen 5 und im Anschluß daran eine Trägerfolie 6 aufgeklebt, die als siliconisierte Folie ausgebildet ist und bspw. aus mit Silicon beschichtetem herkömmlichem Papier besteht.

Mittels eines rotierenden Messers 7 werden derart geformte Teile aus dem Kunststoffband 3 und dem hartmagnetischen Metallstreifen 5 herausgestanzt, daß ein zusammenhängendes Bandgitter 8 übrig bleibt, das von der Trägerfolie 6 abgelöst und auf eine Abfallrolle 9 aufgewickelt wird. Während dieses Stanzvorganges wird das aus der Trägerfolie 6, dem hartmagnetischen Metallstreifen 5 und dem Kunststoffband 3 bestehende Schichtmaterial von einer aus unbeschichtetem Stahl bestehenden Gegendruckrolle 10 auf das rotierende Messer 7 gepreßt.

Wenn hierbei das Stanzmesser auf den hartmagnetischen Metallstreifen 5 einwirkt, wird der Metallstreifen 5 so weit in die Trägerfolie 6 eingedrückt, bis er zerbricht oder zerreißt. Damit dieser Stanzvorgang problemlos ablaufen kann, d.h., damit der Metallstreifen 5 weit genug verformt werden kann, um auf obige Weise sicher getrennt zu werden, muß die Trägerfolie 6 eine bestimmte Dicke und Elastizität aufweisen. Ein Maß für die Dicke von Bandmaterial ist dessen Gewicht, und ein Maß für dessen Elastizität ist dessen Rohdichte. Versuche haben ergeben, daß für den geschilderten Stanzvorgang Trägerfolie 6 mit einem Gewicht von 120 gr/m² und mit einer Rohdichte von 1,2 gr/cm³ besonders gut geeignet ist.

Im nächsten Verfahrensschritt wird auf die mit Teilen des Kunststoffbandes 3 und Stücken des hartmagnetischen Metallstreifens 5 beklebte Trägerfolie 6 eine einseitig mit Leim 4 beschichtete Haltefolie 11 aufgebracht, nachdem diese von einem weiteren Siliconträgerband 2' getrennt wurde, wonach die Trägerfolie 6 von der Haltefolie 11 abgelöst wird. Die nach dem Stanzvorgang übrig gebliebenen Teile des Kunststoffbandes 3 und des hartmagnetischen Metallstreifens 5 bleiben hierbei auf der Haltefolie 11 mittels der Leimschicht 4 haften.

Die einzelnen Stücke des hartmagnetischen Metallstreifens 5 werden nun von einem weichmagnetischen Metallband 12 überklebt, worauf bedruckbares Etikettenpapier 13 angebracht wird. Auf der dem Etikettenpapier 13 abgewandten Seite der Haltefolie 11 wird zunächst eine beidseitig mit Klebstoff beschichtete Folie 14 und darauf ein Trägerband 15 geklebt. Das auf diese Weise hergestellte Etikettenband 16 kann nun einer Etikettenstanze 18 zugeführt oder zunächst auf eine Vorratsrolle 17 aufgewickelt werden, um hieraus erst später Etiketten zu stanzen.

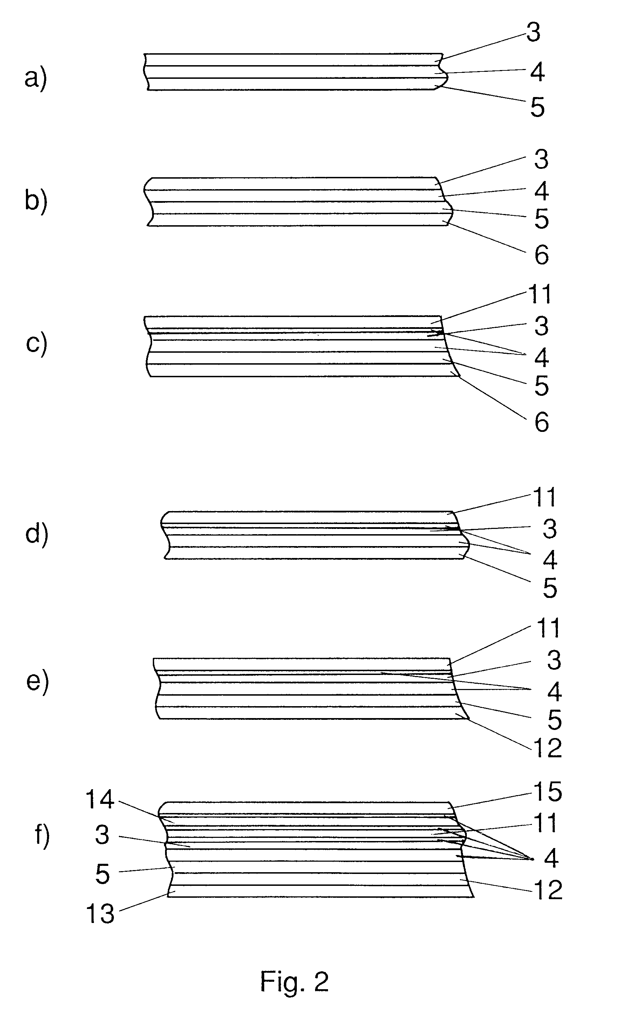

In Fig. 2 sind die bei Durchführung des erfindungsgemäßeb Verfahrens hergestellten Zwischenprodukte dargestellt. Diese Zwischenprodukte sind mit Buchstaben gekennzeichnet, die in Fig. 1 eingezeichnet sind, um zu veranschaulichen, nach welchen Verfahrensschritten sich diese Zwischenprodukte ergeben.

Das Zwischenprodukt a) besteht aus dem einseitig beleimten nichtmetallischen Band 3, das vorzugsweise aus Kunststoff besteht und auf dessen Unterseite der hartmagnetische Metallstreifen 5 mittels einer Leimschicht 4 aufgeklebt ist.

Auf der Unterseite des Zwischenproduktes b) ist mittels der über beide Seiten des Metallstreifens 5 hinausragende Leimschicht 4 die aus siliconisierter Folie bestehende Trägerfolie 6 aufgebracht, die aus mit Silicon beschichtetem Papier besteht, das ein Gewicht von mehr als 100 gr/m², bspw. von 120 gr/m², und eine Rohdichte von mehr als 1 gr/cm³, bspw. von 1,2 gr/cm³ aufweist. Diese Siliconschicht hat eine Reduzierung der Haftwirkung des beschichteten Papieres auf Klebstoff zur Folge, wobei über die Dicke der Siliconschicht dessen Haftwirkung beeinflußbar ist.

Nachdem das durch Stanzen mittels des rotierenden Messers 7 erzeugte Gitter 8 des Kunststoffbandes 3 mit darauf haftenden Resten des Metallstreifens 5 von dem Zwischenprodukt b) abgezogen und die einseitig mit Leim 4 beschichtete Haltefolie 11 aufgeklebt wurde, ergibt sich das Zwischenprodukt c), bei dem die aus dem Kunststoffband 3 und dem Metallstreifen 5 bestehenden Schichten zwar wie im Zwischenprodukt b) eingezeichnet sind, das aber lediglich die nach dem Abziehen des Bandgitters 8 übrig bleibenden Reste des Kunststoffbandes 3 und des Metallstreifens 5 aufweist.

Nach dem Abziehen der Trägerfolie 6 verbleibt das Zwischenprodukt d), woraus sich nach dem Aufkleben des weichmagnetischen Metallbandes 12 das Zwischenprodukt e) ergibt. Die hierbei erforderliche Klebewirkung wird von dem auf der Haltefolie 11 befindlichen Leim 4 ausgeübt, da auf der Haltefolie 11 nur kurze Stücke des Kuststoffbandes 3 und des Metallstreifens 5 unter Bildung von Zwischenräumen aufgeklebt sind, in denen sich der zum Fixieren des Metallbandes 12 erforderliche Leim 4 der Haltefolie 11 befindet.

Nach dem Aufbringen des bedruckbaren Etikettenpapieres 13 auf der einen Seite des Zwischenproduktes e) und nach dem Aufbringen einer beidseitig mit Leim 4 beschichteten Folie 14 und eines Trägerbandes 15 auf dessen anderer Seite, ergibt sich als Endprodukt f) das Etikettenband 16, das nun entweder auf eine Vorratsrolle 17 aufgewickelt werden kann, oder das einer Etikettenstanze 18 zur Herstellung von Etiketten zugeführt werden kann, die in mechanischen oder elektronischen Handetikettiergeräten oder in elektrisch gesteuerten, stationären Etikettendruckern eingelegt, bedruckt und zum Etikettieren zu verkaufender Artikel verwendet werden.

## Patentansprüche

1. Verfahren zur Herstellung von sicherheitsetiketten, bei dem
a) auf ein nichtmetallisches Band (3) ein hartmagnetischer Metallstreifen (5) aufgeklebt wird,
b) auf die mit dem Metallstreifen (5) beklebte Seite des nichtmetallischen Bandes (3) eine Trägerfolie (6) aufgeklebt wird, die eine derartige Dicke und Elastizität aufweist, daß ein Stanzmesser (7) am Ort dessen Einwirkens auf den Metallstreifen (5) eine elastische Deformation des Metallstreifens (5) und der Trägerfolie (6) verursacht, die ausreicht, um den Metallstreifen (5) zu trennen,
c) das Stanzmesser als rotierendes Messer (7) ausgebildet ist, das aus dem nichtmetallischen Band (3) und dem Metallstreifen (5) Teile (8) herausstanzt, die anschließend entfernt werden,
d) auf die verbleibenden Teile des nichtmetallischen Bandes (3) eine Haltefolie (11) aufgebracht wird,
e) die Trägerfolie (6) von der mit Teilen des nichtmetallischen Bandes (3) und des Metallstreifens (5) versehenen Haltefolie (11) abgelöst wird,
f) auf die verbleibenden Teile des hartmagnetischen Metallstreifens (5) ein weichmagnetisches Metallband (12) aufgebracht wird und
g) aus dem in den Verfahrensschritten a) bis f) hergestellten Schichtmaterial Etiketten gestanzt werden.

2. Verfahren zur Herstellung von Sicherheitsetiketten nach Anspruch 1, **dadurch gekennzeichnet**, daß das nichtmetallische Band (3) aus Kunststoff besteht.

3. Verfahren zur Herstellung von Sicherheitsetiketten nach Anspruch 1 oder 2, **dadurch gekennzeichnet,** daß die Trägerfolie (6) ein Gewicht von mehr als 100 gr/m² und eine Rohdichte von mehr als 1 gr/cm³ aufweist.

4. Verfahren zur Herstellung von Sicherheitsetiketten nach Anspruch 3, **dadurch gekennzeichnet,** daß die Trägerfolie (6) ein Gewicht von 120 gr/m² und eine Rohdichte von 1,2 gr/cm³ aufweist.

5. Verfahren zur Herstellung von Sicherheitsetiketten nach einem der Ansprüche 1 bis 4, **dadurch gekennzeichnet,** daß die Trägerfolie (6) als siliconisierte Folie ausgebildet ist.

6. Verfahren zur Herstellung von Sicherheitsetiketten nach einem der Ansprüche 1 bis 5, **dadurch gekennzeichnet,** daß die Haltefolie (11) auf ihrer mit dem Metallstreifen (5) und dem Metallband (12) versehenen Seite mit Etikettenpapier (13) und auf ihrer dem Etikettenpapier (13) abgewandten Seite mit einem Trägerband (15) beklebt wird.
